# EUROPEAN PATENT SPECIFICATION

(11) **EP 2 748 824 B1**
(45) Date of publication and mention of the grant of the patent: **21.10.2015**
(21) Application number: 12753444.4
(22) Date of filing: 16.08.2012
(51) Int. Cl.: G21F 9/00, G21C 1/14, G21C 17/01, G21C 17/013, G21C 19/00, G21C 19/07

(54) **DEVICE AND USE FOR CLEANING SURFACES**
VORRICHTUNG UND IHRE VERWENDUNG ZUR REINIGUNG VON OBERFLÄCHEN
DISPOSITIF ET UTILISATION POUR NETTOYER DES SURFACES

(30) Priority: 26.08.2011 SE 1150773
(43) Date of publication of application: 02.07.2014
(73) Proprietor: Westinghouse Electric Sweden AB, 721 63 Västerås (SE)
(72) Inventor: KLINTBERG, John, S-726 30 Skultuna (SE)
(74) Representative: Israelsson, Stefan
(86) International application number: PCT/EP2012/066017
(87) International publication number: WO 2013/030005

(56) References cited:
- EP-A2- 0 787 646
- EP-A2- 0 990 750
- WO-A1-2005/035909
- US-A- 5 337 434
- US-A1- 2008 125 943

## Description

### TECHNICAL AREA

The present invention relates to a device and use for cleaning surfaces within the nuclear industry and in particular surfaces that are placed in liquid in a nuclear power plant or repository for spent nuclear fuel.

### BACKGROUND OF INVENTION

In a nuclear plant, the reactor and fuel storage pools contain pure water and the overall environment in the pools are to be kept as clean as possible. However, when for example the reactor is in use, a certain amount of radioactive debris and particles, such as crud from the fuel rods or metal chips from wear on reactor components, circulate in the pool and water system and will deposit on surfaces such as floor surfaces and wall surfaces of pools and pipes.

These surfaces need to be cleaned at certain predetermined intervals in order to maintain a high level of cleanliness. The normal procedure is then to empty the pools from water and to clean the surfaces manually with mechanical cleaning devices such as brushes or sponges as well as with high pressure water.

Certain objections have been raised regarding these cleaning methods because they are time consuming and expose workers to radiation. It is also important to clean these surfaces as much as possible since aerosols are liberated when lowering the water level. This may adversely affect persons in this environment and demands have been put to reduce the exposure due to contaminants brought around in the environment by aerosol.

A number of devices have been developed that may perform cleaning of surfaces with reduced labour and also without the need to empty the pools. However, these types of devices are specifically designed to move around on the floor and cannot be used on vertical surfaces. Other types of cleaning devices are designed for cleaning vertical walls, but do require additional equipment in order to be able to move around, such as lifting devices.

EP 787646 A2 discloses a vehicle or robot movable in the water. It includes a body having a first opening in its abdomen. A float is provided at the front portion of the body so that the vehicle body suspends in the water with its front portion up. A pressure reducing device is provided in the body for reducing an inner pressure of the body so as to cause the body to suctionally adhere on a wall in the water with its abdomen facing the wall. A sealing skirt is attached along the first opening formed in the abdomen so that it contacts the wall to maintain the body's inner pressure negative as the body adheres on the wall. A drive unit is also provided in the body for moving the body on the wall. The pressure reducing device includes a hose communicated with the body at its one end and a pump connected with the other end of the hose for pulling water out of the body.

US 2008/0125943 A1 discloses a programmable steerable robot, particularly useful for cleaning swimming pools. It includes: a body member; a first ground-engaging rotary propelling device at one side of the body member; a second ground-engaging rotary propelling device at an opposite side of the body member; a rotary brush carried by the body member engageable with walls of the swimming pool for cleaning same; a drive for driving both of the rotary propelling devices and the rotary brush; a transmission system connecting the drive to both of the rotary propelling devices and the rotary brush; and a programming device controlling the transmission system such that, for preselected travel intervals, both rotary propelling devices are driven in the same direction to propel the body member along a linear path, and for other preselected time intervals, the rotary propelling devices are controlled such that the body member is propelled along a different path.

WO 2005/035909 A1 discloses a cleaning robot for a swimming pool. It has a body unit with a battery power pack, adapted to move along the floor and/or walls of the pool. The robot may comprise a tail portion adapted for floating on the surface of the pool. The tail portion may have a float user interface. The robot may have a memory adapted to store a certain orientation of the robot and a controller to align the robot's orientation in accordance with the stored orientation. The robot may further be adapted to perform straight and stepped laps, to move in known mutually angled directions independently of the swimming pool's shape. The robot may perform a plurality of cleaning modes.

EP 990750 A2 discloses an apparatus and method for cleaning the bottom and vertical side walls of a swimming pool, pond or tank. It employs a robotic, self-propelled cleaner having a protective housing of conventional design, the cleaner being operated at a primary cleaning speed as it traverses the surfaces to be cleaned and until the cleaner housing emerges from the water along a sidewall of the pool; thereafter the cleaner operates at a secondary drive speed that is relatively slower than the primary speed and the cleaner thereafter reverses direction and descends for a predetermined period of time at the slower secondary speed in order to permit the air entrained under the housing to escape without destabilizing the cleaner during descent. After the predetermined period of time, the cleaner resumes operation at the more rapid primary speed until the cleaner housing once again emerges from the water's surface, after which the cycle is repeated.

US 5337434 discloses that directional control means are provided for robotic swimming pool or water tank cleaner of the type having an internal filter bag for removing and retaining debris from the pool, an electric pump for drawing water through the filter bag and two parallel motor driven cylindrical brushes for propelling the cleaner along and sweeping the bottom surface of the pool. Said control means includes one or more water activated hydraulic cylinders located on the side of the cleaner between the brushes, each containing a leg adapted to project downwardly to contact the pool bottom and partially lift one side of the cleaner. As the cleaner moves along the pool bottom it pivots around the projected leg to change direction. Manual or automatic means can be provided to activate the hydraulic legs.

In general the devices developed are not suited for nuclear environments, i.e. chemical, mechanical and electrical requirements on equipment and material to be used in the nuclear environment. Thus there are still improvements to be made in this area.

### BRIEF DESCRIPTION OF INVENTION

The aim of the present invention is to remedy the drawbacks of the state of the art and to provide a cleaning device that is adapted to the specific environment where it is to be used and is versatile enough to handle both horizontal and vertical surfaces to be cleaned.

This solution is obtained by a device according to the features of the independent patent claim 1. Preferable embodiments of the invention form the subject of the dependent patent claims.

A major aspect of the invention, is its characteristic as a device for submersible cleaning of surfaces inside a nuclear power plant, comprising a pump, a nozzle connected to said pump and arranged to face surfaces to be cleaned, cleaning means capable of removing any debris on surfaces to be cleaned, characterised in that it further comprises adjustable one or several flotation means, capable of adjusting the flotation capability of the device depending on cleaning application.

The flotation means provides the possibility of altering the behaviour of the device depending on if it is to be cleaning a horizontal surface or a vertical surface. On a horizontal surface, same weight is preferable, but not too much as it otherwise will make the device difficult or heavy to control and to propel. On the other hand, if generally vertical surfaces are to be cleaned, it is preferable that the device is weight balanced to float or to be weight neutral in water, in order to facilitate the operation along the walls and for safe recovery in case contact is lost with the device during operation.

According to one solution, said flotation means comprises exchangeable flotation bodies having different flotation capabilities. It may then be easy to just replace one body having one flotation capability with another body displaying a different flotation capability. In another feasible solution, said flotation means comprises a fillable volume capable of containing different volumes of flotation gas. With this solution it is easy to alter the flotation capabilities by adding or removing gas from the volume.

According to the present invention, said cleaning mechanism comprises cleaning members capable of directing the removed debris towards the nozzle. In this manner it is easy to collect the debris and dirt removed by the cleaning mechanism, thereby also reducing the risk that removed debris is spread in the water of the pool or other volume where the device is being operated.

In one feasible solution, the cleaning mechanisms comprise rotatable members in contact with the surface to be cleaned. The rotating movement is advantageous in that it is easily accomplished by drive motors, and also that the rotation causes the removed debris in a certain direction. The cleaning mechanisms are applied on two opposite sides of the device, which collect debris and particles from two directions.

The rotatable members may comprise several different materials and designs such as comprise brushes, sponges, rakes or the like depending on the application and its the requirements and on the type of surface.

As an alternative, or in addition, the cleaning mechanisms comprise nozzles capable of ejecting liquid or gas under high pressure, which nozzles may be arranged on rotatable carriers.

Furthermore, indirect mechanical techniques can be applied such as ultrasonic cleaning or pulsed laser cleaning, where cavitations or compressed air bubbles are generated to remove debris.

Preferably the device comprises further a remote control system for controlling the driving of the device, thereby improving the working conditions for the operator.

With the present invention it is feasible to further arrange it with some sort of positioning system capable of tracking and storing the actual position of the device during the cleaning operation. Also additional sensors and devices capable of collecting data and information during the cleaning operation may be added to the device of the present invention. There may for example be graphical presentations displaying areas that have been cleaned and areas that are yet to be handled.

These and other aspects of, and advantages with, the present invention will become apparent from the following detailed description of the invention and from the accompanying drawings.

### BRIEF DESCRIPTION OF DRAWINGS

In the following detailed description of the invention, reference will be made to the accompanying drawings, of which
Fig.1 shows a perspective view of a feasible embodiment of the present invention having certain details removed for clarity,
Figs.2a-c show cleaning mechanisms utilized with the present invention,
Fig.3 shows a cross-sectional view of one of the cleaning mechanisms of Fig.2,
Fig. 4 shows a perspective view of the embodiment of Fig. 1 cleaning a horizontal surface, and
Fig. 5 shows a perspective view of the embodiment of Fig. 1 cleaning a vertical surface.

### DETAILED DESCRIPTION OF THE INVENTION

A non-limiting example of the present invention will be described below in conjunction with the accompanying drawings.

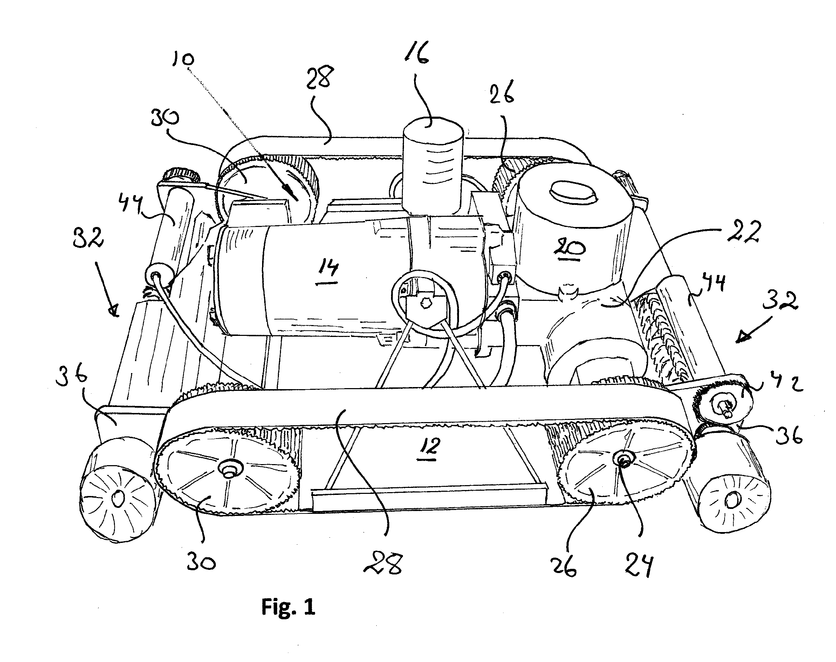

It comprises a frame or the like central support 10. To the support a plate 12 is attached. The plate is arranged with at least one opening (not shown), preferably centrally, and the plate is formed such around that at least one opening that a nozzle is formed, facing downwards in Fig. 1, or functions as a suction nozzle as will be described below.

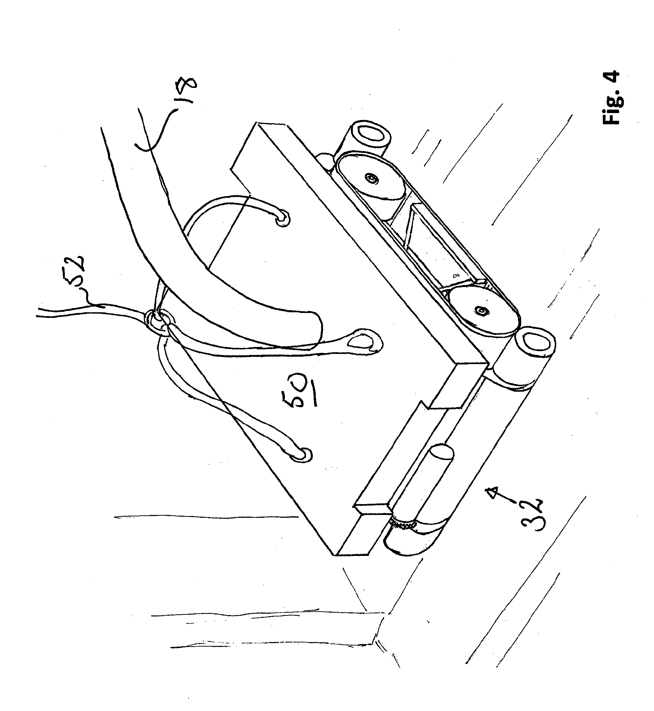

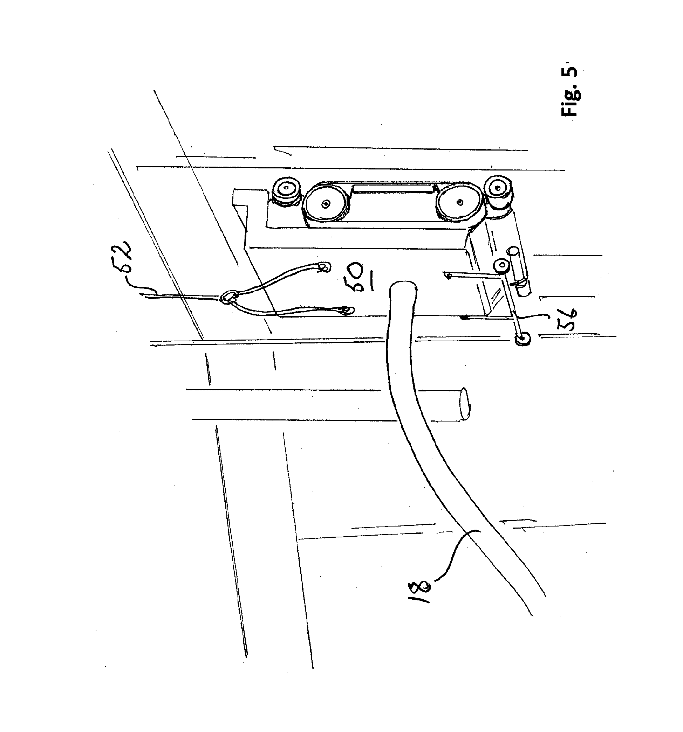

A pump 14 is connected to the opening preferably via tube or hose. The pump is capable of creating a high suction action at the nozzle. The pump is arranged with an outlet passage 16, which is connectable to a flexible conduit or hose 18, Figs. 4 and 5. The hose 18 is then preferably connected to a purpose built filter, a collecting vessel or the like.

The device is further arranged with propelling means. The propelling means comprises in the embodiment shown an electric motor 20 attached to the frame and/or the pump 14. Preferably the electric motor 20 is drivably connected to a gear box 22. The gear box 22 is in turn arranged with two output shafts 24, which extend to the each side of the gear box. To each end of the shaft 24, a drive wheel 26 is arranged. The drive wheels 26 are arranged with profiles on their outer circumferences, like ledges. These ledges cooperate with corresponding ribs arranged on inner surfaces of drive caterpillar tracks 28. These tracks 28 also run along support wheels 30 arranged on shafts on the opposite side of the nozzle 12.

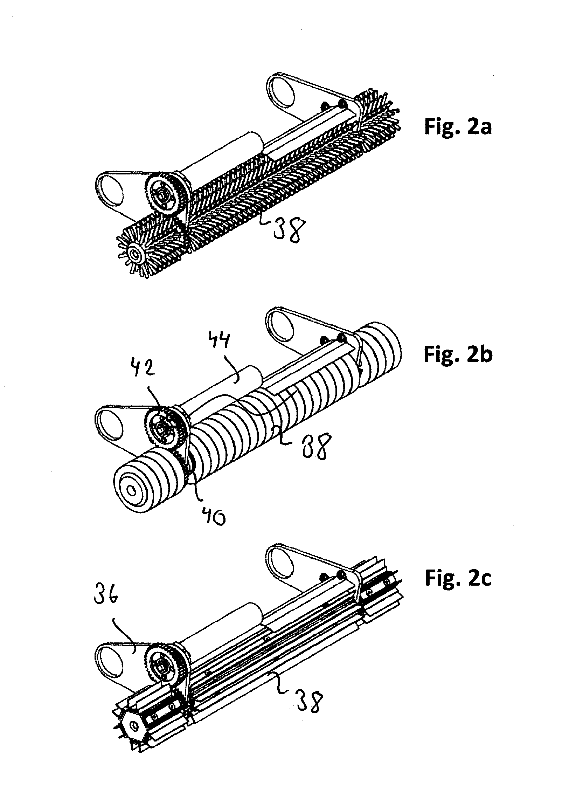

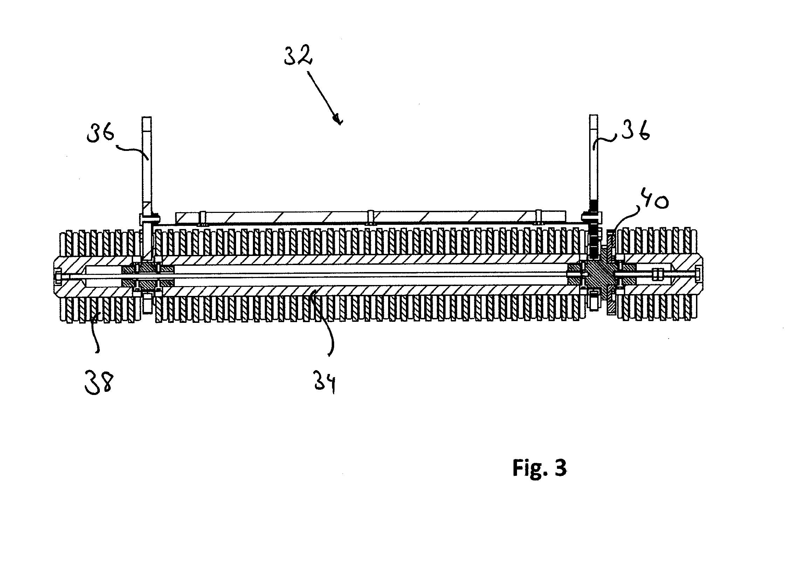

At the both shafts of the propelling means, cleaning mechanisms 32 are arranged. Each cleaning mechanism 32 comprises an elongated hollow shaft 34, Fig. 3, rotatably journalled on fixtures 36 arranged to the device. The fixtures are preferably turnably arranged as will be described below. On the shaft 34, cleaning devices 38 are arranged, which could be tubularly shaped brushes, sponges, scrapes or the like capable of removing dirt, debris and the like on the surfaces to be cleaned. Some examples of different types of cleaning devices are shown in Fig. 2. The shaft 34 carrying the cleaning devices 38 is rotatably attached to at least one cog wheel 40, which cog wheel 40 in turn is meshed with a drive cog wheel 42, Fig. 2. This drive cog wheel 42 is attached to a drive shaft of an electric motor 44 in turn attached to one of the fixtures 36 of the cleaning mechanisms. Each electric motor 44 is arranged to rotate such that the cleaning devices rotate to push the dirt and debris towards the center of the device and thus the nozzle. The overall design of the cleaning mechanisms is to provide a self-supported unit and to minimize the risk of small components entering the reactor pool or similar environments in case of a breakage. This may be seen in the cross-sectional view of Fig. 3

The device according to the invention is further arranged with flotation means 50. These flotation means are adapted to alter the flotation capabilities of the device depending on the cleaning application. In the embodiment shown the flotation means is a volume of material that is capable of altering the flotation capability when submerged in water. It may for example be some type of foamed plastic that can hold an amount of air. It may also be some type of balloon or enclosure that can be filled with air.

Depending on the type of application, different flotation capabilities are desired. Figure 4 discloses a device according to the present invention when used on a generally horizontal surface. Here it is advantageous that the device just about sinks. When the pump is started, the suction action from the nozzle will steady the device on the horizontal surface and will allow the propelling means to make the device go forward or backward on the surface. Thus there is a certain balance between the suction action and the overall sinking weight of the device.

Further, in this application when the device is used on horizontal surfaces, the cleaning mechanisms will be moved in contact with the surface due to turnable attachment and due to the gravitation.

If the device according to the invention is to be used on generally vertical surfaces, it is advantageous that it just about floats. Then the flotation means is altered to obtain these features, Fig. 5. In one embodiment the volume of foamed plastic is exchanged to another volume having better flotation capabilities. In another embodiment, containing a volume to be filled with air, a larger volume of air may be introduced. Again, in use, the pump is activated, causing a suction action which draws the device against the vertical surfaces to be cleaned. The propelling means are then activated to drive the device up and down along the surfaces.

In this application, some sort of positioning mechanism (not shown) should be used in order ascertain a good contact of the cleaning devices against the surface to be cleaned since the gravity cannot be used. The positioning means may for example be spiral springs, elastic elements or the like capable of turning the cleaning devices against the surface.

For both applications, it is preferable to have some sort of safety line 52 so that the device may be brought back up after use. The application for vertical surfaces may further be arranged with some sort of support or stand 56, Fig. 5, such that the device may rest in the vertical position when it has reached a horizontal surface.

For both applications, a remote control unit is preferably utilized, with which an operator may drive the device during the cleaning action. In this context it is of course feasible to use some sort of monitoring means such as a camera mounted on the device, which will provide the user with visual information.

Also, even if mechanical cleaning devices have been described above, it is of course feasible to use other types of cleaning devices such as pressurized water jets, pressurized air jets, ultra-sonic waves, pulsed laser to mention a few. Then a number of nozzles may be arranged to cover the width of the device, where the nozzles may be positioned inclined on a rotating carrier so that the jets sweep over the surface. Preferably the jets are also directed such that any removed debris or dirt is directed towards the suction nozzle.

Further possibilities are to equip the device with position monitoring means, whereby the actual position of the device may be obtained. This can be used to monitor the surfaces that have been cleaned and the surfaces that remain to be cleaned. It is further possible to provide the device with additional devices such as sensors and the like for obtaining additional information. The information could for example be radioactive activity at certain locations, the status of welds in the reactor tank, taking samples from the reactor tank, just to mention a few.

It is to be understood that the embodiment described above and shown in the drawings is to be regarded only as a non-limiting example of the invention and that it may be modified in many ways within the scope of the patent claims.

## Claims

1. Device for submersibly cleaning surfaces placed in liquid in a nuclear power plant or repository for spent nuclear fuel, comprising
- a pump (14),
- a nozzle (12) connected to said pump (14) and arranged to face surfaces to be cleaned,
- cleaning mechanism (32) capable of removing any debris on surfaces to be cleaned,
**characterised in that** it further comprises adjustable flotation means (50), capable of adjusting the flotation capability of the device depending on cleaning application,
wherein said nozzle (12) is arranged such that it functions as a suction nozzle such that the suction action from the nozzle (12) will steady the device on a horizontal surface, when the device is used on a horizontal surface, and such that the suction action will draw the device against a vertical surface to be cleaned, when the device is used on a vertical surface,
wherein said nozzle (12) is arranged to collect debris and dirt removed by the cleaning mechanism (32),
wherein said cleaning mechanisms (32) comprise cleaning members capable of directing the removed debris towards the nozzle, and
wherein the cleaning mechanisms (32) are applied on two opposite sides of the device, which collect debris and particles from two directions.

2. Device according to claim 1, wherein said flotation means (50) comprises exchangeable flotation bodies having different flotation capabilities.

3. Device according to claim 1, wherein said flotation means (50) comprises a fillable volume capable of containing different volumes of flotation gas.

4. Device according to any of the preceding claims, wherein the cleaning members comprises rotatable members (38) in contact with the surface to be cleaned.

5. Device according to claim 4, wherein the rotatable members (38) comprise brushes, sponges, rakes.

6. Device according to any of the preceding claims, wherein the cleaning members comprise nozzles capable of ejecting liquid or gas under high pressure.

7. Device according to claim 6, wherein said nozzles are arranged on rotatable carriers.

8. Device according to any of the preceding claims, wherein the cleaning mechanisms (32) are arranged as units and designed to minimize the risk of dropping small components in the event of a breakage.

9. Device according to any of the preceding claims, further comprising a remote control system for controlling the driving of the device.

10. Device according to any of the preceding claims, wherein it further comprises a positioning system capable of tracking and storing the actual position of the device during the cleaning operation.

11. Device according to claim 10, wherein it comprises additional sensors and devices capable of collecting data and information during the cleaning operation.

12. Use of the device according to any one of the preceding claims for submersibly cleaning surfaces placed in liquid in a nuclear power plant or repository for spent nuclear fuel, comprising the step of altering the floatation capability of the device depending on the cleaning application.

## Patentansprüche

1. Vorrichtung zur Unterwasser-Reinigung von in einer Flüssigkeit befindlichen Oberflächen in einem Kernkraftwerk oder einem Lager für verbrauchten Kernbrennstoff, umfassend:
- eine Pumpe (14),
- eine Düse (12), die mit der Pumpe (14) verbunden ist und derart angeordnet ist, dass sie den zu reinigenden Oberflächen zugewandt ist,
- einen Reinigungsmechanismus (32), der in der Lage ist, Fremdkörper von den zu reinigenden Oberflächen zu entfernen, **dadurch gekennzeichnet, dass** sie ferner ein einstellbares Flotationsmittel (50) umfasst, das in der Lage ist, die Flotationsfähigkeit der Vorrichtung in Abhängigkeit von der Reinigungsanwendung einzustellen,
wobei die Düse (12) derart angeordnet ist, dass sie als Saugdüse funktioniert, so dass die von der Düse (12) ausgehende Saugwirkung die Vorrichtung auf einer horizontalen Oberfläche festhält, wenn die Vorrichtung auf einer horizontalen Oberfläche verwendet wird, und so dass die Saugwirkung die Vorrichtung zu einer zu reinigenden vertikalen Oberfläche zieht, wenn die Vorrichtung auf einer vertikalen Oberfläche verwendet wird,
wobei die Düse (12) derart angeordnet ist, dass sie die vom Reinigungsmechanismus (32) entfernten Fremdkörper und Verunreinigungen sammelt,
wobei die Reinigungsmechanismen (32) Reinigungselemente umfassen, die in der Lage sind, die entfernten Fremdkörper zur Düse zu richten, und
wobei die Reinigungsmechanismen (32) an zwei gegenüberliegenden Seiten der Vorrichtung angeordnet sind und Fremdkörper und Partikel von zwei Richtungen sammeln.

2. Vorrichtung nach Anspruch 1, wobei das Flotationsmittel (50) austauschbare Flotationskörper mit unterschiedlicher Flotationsfähigkeit umfasst.

3. Vorrichtung nach Anspruch 1, wobei das Flotationsmittel (50) ein füllbares Volumen umfasst, das in der Lage ist, unterschiedliche Volumina eines Flotationsgases zu enthalten.

4. Vorrichtung nach einem der vorhergehenden Ansprüche, wobei die Reinigungselemente drehbare Elemente (38) umfassen, die mit der zu reinigenden Oberfläche in Kontakt sind.

5. Vorrichtung nach Anspruch 4, wobei die drehbaren Elemente (38) Bürsten, Schwämme, Rechen umfassen.

6. Vorrichtung nach einem der vorhergehenden Ansprüche, wobei die Reinigungselemente Düsen umfassen, die in der Lage sind, Flüssigkeit oder Gas unter hohem Druck auszustoßen.

7. Vorrichtung nach Anspruch 6, wobei die Düsen auf drehbaren Trägern angeordnet sind.

8. Vorrichtung nach einem der vorhergehenden Ansprüche, wobei die Reinigungsmechanismen (32) als Einheiten angeordnet sind und dafür bestimmt sind, das Risiko zu minimieren, dass im Fall eines Bruchs kleine Komponenten hinunterfallen.

9. Vorrichtung nach einem der vorhergehenden Ansprüche, ferner umfassend ein Fernsteuerungssystem zur Steuerung des Antriebs der Vorrichtung.

10. Vorrichtung nach einem der vorhergehenden Ansprüche, wobei sie ferner ein Positionierungssystem umfasst, das in der Lage ist, die tatsächliche Position der Vorrichtung während des Reinigungsvorgangs nachzuverfolgen und zu speichern.

11. Vorrichtung nach Anspruch 10, wobei sie zusätzliche Sensoren und Vorrichtungen umfasst, die in der Lage sind, während des Reinigungsvorgangs Daten und Informationen zu sammeln.

12. Verwendung der Vorrichtung nach einem der vorhergehenden Ansprüche zur Unterwasser-Reinigung von in einer Flüssigkeit befindlichen Oberflächen in einem Kernkraftwerk oder einem Lager für verbrauchten Kernbrennstoff, umfassend den Schritt der Veränderung der Flotationsfähigkeit der Vorrichtung in Abhängigkeit von der Reinigungsanwendung.

## Revendications

1. Dispositif pour nettoyer en immersion des surfaces placées dans un liquide dans une centrale nucléaire ou un dépôt de combustible nucléaire usé, comprenant
- une pompe (14),
- une buse (12) raccordée à ladite pompe (14) et agencée pour faire face à des surfaces devant être nettoyées,
- un mécanisme de nettoyage (32) apte à retirer de quelconques débris sur des surfaces devant être nettoyées,
**caractérisé en ce qu'**il comprend en outre des moyens de flottaison réglables (50), aptes à régler la capacité de flottaison du dispositif en fonction de l'application de nettoyage,
dans lequel ladite buse (12) est agencée de manière à fonctionner comme une buse d'aspiration de sorte que l'action d'aspiration depuis la buse (12) stabilise le dispositif sur une surface horizontale, lorsque le dispositif est utilisé sur une surface horizontale, et de sorte que l'action d'aspiration attire le dispositif contre une surface verticale devant être nettoyée, lorsque le dispositif est utilisé sur une surface verticale, dans lequel ladite buse (12) est agencée pour collecter les débris et la poussière éliminés par le mécanisme de nettoyage (32),
dans lequel lesdits mécanismes de nettoyage (32) comprennent des éléments de nettoyage aptes à diriger les débris éliminés en direction de la buse, et
dans lequel les mécanismes de nettoyage (32) sont appliqués sur deux côtés opposés du dispositif, qui collectent les débris et les particules depuis deux directions.

2. Dispositif selon la revendication 1, dans lequel lesdits moyens de flottaison (50) comprennent des corps de flottaison échangeables présentant des capacités de flottaison différentes.

3. Dispositif selon la revendication 1, dans lequel lesdits moyens de flottaison (50) comprennent un volume remplissable apte à contenir des volumes différents de gaz de flottaison.

4. Dispositif selon l'une quelconque des revendications précédentes, dans lequel les éléments de nettoyage comprennent des éléments rotatifs (38) en contact avec la surface devant être nettoyée.

5. Dispositif selon la revendication 4, dans lequel les éléments rotatifs (38) comprennent des brosses, des éponges, des râteaux.

6. Dispositif selon l'une quelconque des revendications précédentes, dans lequel les éléments de nettoyage comprennent des buses aptes à éjecter un liquide ou un gaz sous haute pression.

7. Dispositif selon la revendication 6, dans lequel lesdites buses sont agencées sur des supports rotatifs.

8. Dispositif selon l'une quelconque des revendications précédentes, dans lequel les mécanismes de nettoyage (32) sont agencés comme des unités et conçus pour réduire au minimum le risque de chute de petits éléments en cas de rupture.

9. Dispositif selon l'une quelconque des revendications précédentes, comprenant en outre un système de commande à distance pour commander l'entraînement du dispositif.

10. Dispositif selon l'une quelconque des revendications précédentes, qui comprend en outre un système de positionnement apte à suivre et stocker la position réelle du dispositif pendant l'opération de nettoyage.

11. Dispositif selon la revendication 10, qui comprend des capteurs et des dispositifs supplémentaires aptes à collecter des données et des informations pendant l'opération de nettoyage.

12. Utilisation du dispositif selon l'une quelconque des revendications précédentes pour nettoyer en immersion des surfaces placées dans un liquide dans une centrale nucléaire ou un dépôt pour combustible nucléaire usé, comprenant l'étape de modification de la capacité de flottaison du dispositif en fonction de l'application de nettoyage.
